# EUROPÄISCHE PATENTSCHRIFT

(11) **EP 4 116 681 B1**
(45) Veröffentlichungstag und Bekanntmachung des Hinweises auf die Patenterteilung: **01.10.2025**
(21) Anmeldenummer: 22178841.7
(22) Anmeldetag: 14.06.2022
(51) Int. Cl.: G01J 1/00, G01J 1/02, G01J 1/04, G01J 1/42

(54) **VORRICHTUNG UND VERFAHREN ZUR INTENSITÄTSMESSUNG VON DER DURCH EINE UV-STRAHLUNGSQUELLE ERZEUGTEN UV-STRAHLUNG**
DEVICE AND METHOD FOR MEASURING INTENSITY OF UV RADIATION GENERATED BY A UV RADIATION SOURCE
DISPOSITIF ET PROCÉDÉ DE MESURE DE L'INTENSITÉ DU RAYONNEMENT UV GÉNÉRÉ PAR UNE SOURCE DE RAYONNEMENT UV

(30) Priorität: 17.06.2021 DE 102021003128
(43) Veröffentlichungstag der Anmeldung: 11.01.2023
(73) Patentinhaber: Rausch Rehab GmbH, 87509 Immenstadt i. Allgäu (DE)
(72) Erfinder: REUTEMANN, Thomas, 87527 Sonthofen (DE)
(74) Vertreter: Müller-Boré & Partner Patentanwälte PartG mbB

(56) Entgegenhaltungen:
- CN-A- 109 317 375
- JP-A- 2008 008 848
- US-A1- 2005 174 808
- US-A1- 2012 223 220
- US-A1- 2013 093 322
- US-A1- 2015 048 257
- US-A1- 2015 209 457

## Beschreibung

Die Erfindung betrifft eine Vorrichtung und ein Verfahren zur Intensitätsmessung von der durch eine UV-Strahlungsquelle, insbesondere von einer UV-Strahlungsquelle für Kanalsanierungsarbeiten, erzeugten UV-Strahlung.

Für die Sanierung von Rohren oder allgemein von Leitungen, wie z.B. Kanälen oder an die Kanalisation angeschlossenen Rohrleitungen, wurden in den letzten Jahrzehnten verschiedene Verfahren entwickelt, bei denen die Innenseite der Rohre mit einem UV-härtbaren Material ausgekleidet werden und anschließend eine Härtung des Materials durch den Einsatz von ultravioletter (UV) Strahlung erfolgt. Dabei ist die Aufgabe bei der Sanierung von Rohrleitungen, vorbeugende Wartung und Reparaturen durchzuführen, um weitere Schäden, z.B. durch das Austreten von Flüssigkeiten, zu vermeiden.

Insbesondere können zur Sanierung Auskleidungsschläuche, sogenannte Liner, welche zumindest teilweise aus einem UV-härtbaren bestehen, in erdverlegte Rohrsystemen, z.B. bei der Sanierung von Kanälen und/oder Schächten, eingesetzt werden. Der Hauptvorteil für den Einsatz der Liner in einer Rohrleitung und der Aushärtung des Liners, besteht darin, dass die Sanierung von der Innenseite der Rohrleitung aus erfolgt und somit der Zugang zur Rohrleitung von außen nicht erforderlich ist.

Zur Sanierung eines Rohrs wir der Liner, welcher im Wesentlichen schlauchförmig ausgebildet sein kann, in das Rohr eingebracht und an die Innenfläche des Rohrs angelegt. Anschließend werden in das Rohr eine oder mehrere UV-Strahlungsquellen einer Aushärtevorrichtung eingebracht und betrieben, um den Liner auszuhärten.

Damit die Aushärtung des Liners korrekt bzw. vorschriftsmäßig erfolgt, muss sichergestellt werden, dass durch die UV-Bestrahlung mittels der einen oder mehreren UV-Strahlungsquellen ausreichend Energie in den Liner eingetragen wird. Dabei ist der Energieeintrag insbesondere von der Intensität der UV-Strahlung und der Strahlungsdauer abhängig.

Es hat sich allerdings gezeigt, dass die von einem Hersteller einer UV-Strahlungsquelle angegebene Intensität nicht immer der in der Praxis, also während der Kanalsanierung, erreichten Intensität des UV-Strahlungsquelle entspricht. Oft liegt die Intensität der UV-Strahlung der für die Kanalsanierung eingesetzten UV-Strahlungsquelle unter der Herstellerangabe, wodurch es zu einer unzureichenden Aushärtung des Liners kommen kann. Die Abweichung der Intensität der UV-Strahlungsquelle während der Kanalsanierung von der Herstellerangabe kann verschiedene Ursachen haben. Zum einen kann aufgrund der Alterung der UV-Strahlungsquelle die zu erreichende Intensität abnehmen. Zum anderen kann eine Aushärtevorrichtung, an der die einen oder mehreren UV-Strahlungsquellen zum Aushärten des Liners betrieben werden, nicht ausreichend elektrische Leistung zur Verfügung stellen, so dass die vom Hersteller angegebene Intensität der UV-Strahlungsquelle nicht erreicht wird.

Ferner betrifft die US 2005/0174808 A1 eine Schnellbefestigungsvorrichtung zur Verwendung bei der wiederholten Prüfung von Diodenlichtquellen. Die Schnellbefestigungsvorrichtung umfasst ein Schnellbefestigungsmodul mit einer festen Position in Bezug auf eine Prüfposition für die Diodenlichtquellen und eine Montagebaugruppe, auf dem jede Diodenlichtquelle beim Testen montiert wird.

Die US 2015/048257 A1 betrifft eine Vorrichtung zum Desinfizieren eines Objekts durch zumindest teilweises Entfernen einer biologisch aktiven Verunreinigung davon. Ein Gehäuse umschließt eine Desinfektionskammer, in der ein Teil des zu desinfizierenden Objekts aufgenommen werden soll, und umfasst eine Einlassöffnung, durch die das Objekt in die Vorrichtung eingeführt wird. Eine Zuführeinrichtung transportiert den Gegenstand im Allgemeinen zur Desinfektionskammer und entlädt ihn nach der Desinfektion. Eine Ultraviolettlichtquelle sendet ultraviolettes Licht aus, das auf den in die Desinfektionskammer eingeführten Teil des Objekts ausgeübt wird, um mindestens einen Teil der auf dem Objekt vorhandenen biologisch aktiven Verunreinigung zu deaktivieren. Eine Steuerung steuert den Betrieb der Zufuhreinrichtung und/oder des ultravioletten Lichts, um einen Grad der Desinfektion des Objekts zu erreichen, wodurch das Objekt für die Verwendung in einer im Wesentlichen sterilen Anwendung geeignet wird.

JP 2008 008848 A betrifft ein UV-Strahlungsüberwachungssystem, welches umfasst: ein Stromversorgungsgerät, das elektrische Energie liefert, eine Ultraviolettstrahlungsquelle, die ultraviolette Strahlung ausstrahlt, indem sie elektrische Energie von dem Stromversorgungsgerät erhält, und eine Diamantschicht als Erfassungsabschnitt, der abhängig von der Intensität der empfangenen ultravioletten Strahlung eine elektrische Ladungsmenge erzeugt und außerdem ausgestattet ist mit einen Ultraviolettsensor, der elektrische Signale abhängig von der Intensität der oben erwähnten Ultraviolettstrahlung aus der in der Diamantschicht gebildeten elektrischen Ladung ausgibt, und eine Steuerung, die die Ausgabe der Ultraviolettstrahlungsquelle steuert, indem sie die elektrische Stromversorgung des Stromversorgungsgeräts auf der Grundlage der elektrischen Signale steuert.

US 2015/209457 A1 ein Desinfektionssystem umfasst ein Gehäuse. Eine Quelle für ultraviolettes Licht (UV) ist am Gehäuse befestigt und so konfiguriert, dass sie UV-Licht zur Desinfektion eines Ziels aussendet. Am Gehäuse ist ein Prozessor befestigt, der mit der UV-Lichtquelle in Verbindung steht. Der Prozessor ist so konfiguriert, dass er die UV-Lichtquelle für einen ausgewählten Zeitraum aktiviert, der für die Desinfektion des Ziels geeignet ist.

CN 109 317 375 A betrifft eine UV-LED-Härtungslampe und ein Verfahren zur Überwachung der Härtungslampe.

Es ist daher Aufgabe der Erfindung, eine Vorrichtung und ein Verfahren anzugeben, die eine zuverlässige Ermittlung der Intensität einer UV-Strahlung einer für Kanalsanierungsarbeiten vorgesehenen UV-Strahlungsquelle ermöglicht.

Gelöst wird diese Aufgabe durch die Gegenstände der unabhängigen Ansprüche.

Bevorzugte Ausführungsformen sind in den abhängigen Ansprüchen angegeben.

Ein Aspekt betrifft eine Vorrichtung zur Intensitätsmessung von der durch einer UV-Strahlungsquelle für Kanalsanierungsarbeiten erzeugten UV-Strahlung, wobei die Vorrichtung aufweist:
- eine Aufnahmeeinheit mit einem Messraum zum Aufnehmen der UV-Strahlungsquelle während der Intensitätsmessung,

wobei die Aufnahmeeinheit einen ersten UV-Sensor zur Messung der Intensität von der durch die UV-Strahlungsquelle erzeugten UV-Strahlung aufweist,
wobei die Aufnahmeeinheit einen UV-Strahlungsquellenanschluss aufweist, mit dem die UV-Strahlungsquelle verbindbar ist, um die UV-Strahlungsquelle mit Betriebsspannung bzw. Betriebsstrom zu versorgen,
wobei in einem ersten Messmodus die Vorrichtung dazu ausgelegt ist, die Intensität einer UV-Strahlungsquelle zu messen, indem die UV-Strahlungsquelle in dem Messraum angeordnet ist und an dem UV-Strahlungsquellenanschluss betrieben wird, und
wobei in einem zweiten Messmodus die Vorrichtung dazu ausgelegt ist, die Intensität einer UV-Strahlungsquelle zu messen, indem die UV-Strahlungsquelle in dem Messraum angeordnet ist und an einer externen Aushärtevorrichtung zur Aushärtung von UV-härtbaren Kanalsanierungsmitteln betrieben wird.

Vorteilhafterweise erlaubt die vorgeschlagene Vorrichtung, dass die Intensität der UV-Strahlungsquelle im ersten Messmodus einzeln, d.h., die UV-Strahlungsquelle wird nicht durch die Aushärtevorrichtung betrieben, gemessen wird. Dies erlaubt insbesondere Abweichungen zwischen der gemessenen Intensität und der vom Hersteller der UV-Strahlungsquelle angegebenen Intensität zu erkennen. Im zweiten Messmodus wird die Intensität der UV-Strahlungsquelle gemessen, wenn die UV-Strahlungsquelle durch die Aushärtevorrichtung betrieben wird. D. h., im zweiten Messmodus wir die UV-Strahlungsquelle durch die Aushärtevorrichtung mit Betriebsspannung bzw. Betriebsstrom versorgt und nicht durch die Vorrichtung zur Intensitätsmessung selbst. Vorzugsweise kann es sich beim dem Kanalsanierungsmittel um ein UV-härtbares Material, bspw. um den oben genannten Liner handeln.

Vorteilhafterweise ist es somit möglich, Intensitätsabweichungen von der im ersten Messmodus und zweiten Messmodus gemessenen Intensität zu erkennen. Ferner können Abweichungen von der Herstellerangabe erkannt werden. Derartige Intensitätsabweichungen können beispielsweise durch einen Leitungswiderstand der in der Aushärtevorrichtung verwendeten Kabel oder eine Verlustleistung der Aushärtevorrichtung verursacht werden. Die Aushärtevorrichtung kann insbesondere ein oder mehrere UV-Strahlungsquellen aufweisen, welche (räumlich) hintereinander in einem String angeordnet sind und welche in den oben erwähnten Liner eingeführt werden können. Insbesondere können die ein oder mehreren UV-Strahlungsquellen elektrisch in Serie oder vorzugsweise parallel geschaltet an der Aushärtevorrichtung betrieben werden.

Folglich erlaubt die vorgeschlagene Vorrichtung, die Intensität der zur Aushärtung des Kanalsanierungmittels genutzten UV-Strahlungsquelle, wie diese für die Aushärtung betrieben wird, zu bestimmen. Ferner können durch die Aushärtevorrichtung verursachte Intensitätsverluste ermittelt werden. Somit ist es möglich, Anwendungsfehler, bspw. einen zu geringen Energieeintrag, bei der Aushärtung des Kanalsanierungsmittels zu vermeiden.

Die UV-Strahlungsquelle kann eine elektrische Leistungsaufnahme von mindestens 50 W, bevorzugt mindestens 100 W und besonders bevorzugt von mindestens 250 W aufweisen. Bspw. kann die Leistungsaufnahme der UV-Strahlungsquelle auch 1000 W oder höher betragen. Entsprechend kann die Aufnahmeeinheit dazu ausgelegt sein, eine für die UV-Strahlungsquelle ausreichende elektrische Leistung bereitzustellen. Bevorzugt kann die durch die Aufnahmeeinheit bereitgestellte elektrische Leistung zwischen 200 W bis 1200 W betragen. Die Aufnahmeeinheit kann insbesondere einen Versorgungsanschluss aufweisen, mit dem die Aufnahmeeinheit mit einer Versorgungsspannung, bspw. 110 VAC oder 230 VAC, versorgt werden kann. Ferner kann die UV-Strahlungsquelle im Wesentlichen röhrenförmig ausgebildet sein und dazu ausgebildet sein, entlang der Längsachse der UV-Strahlungsquelle 360° umfänglich UV-Strahlung abzugeben.

Vorzugsweise weist die Aufnahmeeinheit einen ersten Verschluss auf, der dem ersten UV-Sensor zugeordnet ist, wobei in einem geöffneten Zustand des ersten Verschlusses, der erste UV-Sensor der UV-Strahlung der UV-Strahlungsquelle ausgesetzt ist, und wobei in einem geschlossenen Zustand des ersten Verschlusses, der erste UV-Sensor von der UV-Strahlung der UV-Strahlungsquelle abgeschirmt ist.

Vorteilhafterweise erlaubt der erste Verschluss, dass der erste UV-Sensor von der UV-Strahlung der UV-Strahlungsquelle geschützt werden kann, wenn der erste UV-Sensor nicht zur Intensitätsmessung genutzt wird. Wie oben erwähnt, kann die UV-Strahlungsquelle eine hohe elektrische Leistungsaufnahme und eine damit verbundene hohe Intensität der UV-Strahlung aufweisen. Das Aussetzen des UV-Sensors dieser hohen UV-Strahlung der UV-Strahlungsquelle führt allerdings zu einer Alterung des UV-Sensors, wodurch die Genauigkeit des UV-Sensors mit der Zeit abnimmt bzw. die Fehleranfälligkeit des UV-Sensors mit der Zeit zunimmt. Vorteilhafterweise erlaubt die Verwendung des ersten Verschlusses, dass der erste UV-Sensor lediglich für die eigentliche Intensitätsmessung der UV-Strahlung ausgesetzt wird. Insbesondere wird der erste Verschluss für die Intensitätsmessung geöffnet, um den ersten UV-Sensor der UV-Strahlung auszusetzen, und im Anschluss an die Intensitätsmessung wird der erste Verschluss geschlossen, um den ersten UV-Sensor vor der UV-Strahlung abzuschirmen.

Vorzugsweise ist die Vorrichtung dazu ausgelegt ist, den Zustand des ersten Verschlusses in Abhängigkeit von einer Strahlungsdauer der UV-Strahlungsquelle innerhalb des Messraums zu steuern, wobei zu Beginn der Strahlungsdauer der erste Verschluss im geschlossenen Zustand ist und nach einer vorgebbaren Zeitdauer in den geöffneten Zustand schaltet. Vorteilhafterweise kann somit verhindert werden, dass der erste UV-Sensor über die gesamte Strahlungsdauer der UV-Strahlungsquelle der UV-Strahlung ausgesetzt ist. Für gewöhnlich benötigt die UV-Strahlungsquelle eine gewisse Strahlungsdauer bzw. Betriebszeit, bis ein Intensitätsniveau der UV-Strahlungsquelle stabilisiert bzw. konstant ist. Mit anderen Worten, die UV-Strahlungsquelle muss erst aufgewärmt werden, bis ein stabiles Intensitätsniveau der UV-Strahlung erreicht. Vorzugsweise soll die eigentliche Intensitätsmessung der UV-Strahlung erst nach dem Aufwärmen der UV-Strahlungsquelle, also nach dem das Intensitätsniveau bzw. die Intensität der UV-Strahlung stabil ist, erfolgen. Vorteilhafterweise wird während dem Aufwärmen der UV-Strahlungsquelle der erste UV-Sensor durch den ersten Verschluss von der UV-Strahlung der UV-Strahlungsquelle abgeschirmt. Vorteilhafterweise kann damit der erste UV-Sensor lediglich der UV-Strahlung ausgesetzt werden, wenn die UV-Strahlungsquelle aufgewärmt, also ein stabiles Intensitätsniveau erreicht hat. Dadurch wird der UV-Sensor nur kurz der UV-Strahlung ausgesetzt wodurch die Alterung des ersten UV-Sensors reduziert werden kann.

Vorzugsweise kann die benötigte Aufwärmdauer der UV-Strahlungsquelle in der Vorrichtung eingestellt werden, sodass der erste Verschluss in Abhängigkeit der eingestellten Aufwärmdauer geöffnet und geschlossen werden kann. Insbesondere wird der erste Verschluss derart gesteuert, dass nach Ablauf der Aufwärmdauer, der Verschluss geöffnet wird und nach einer vorgegebenen Messdauer, während der die eigentliche Intensitätsmessung durchgeführt wird, wieder geschlossen wird. Die Messdauer kann mindestens 1 s (Sekunde), bevorzugt mindestens 2 s und maximal 10 s, bevorzugt maximal 5 s betragen.

Vorzugsweise weist die Aufnahmeeinheit eine elektronische Versorgungseinheit auf, welche dazu ausgelegt ist, in dem ersten Messmodus die UV-Strahlungsquelle mit der Betriebsspannung bzw. dem Betriebsstrom zu versorgen. Vorzugsweise kann die elektronische Versorgungseinheit eine elektrische Leistung von 200 W bis 1200 W zur Versorgung der UV-Strahlungsquelle bereitstellen. Ferner kann die elektronische Versorgungseinheit dazu ausgelegt sein, den ersten Verschluss in Abhängigkeit einer Strahlungsdauer der UV-Strahlungsquelle zu öffnen und/oder zu schließen.

Vorzugsweise kann im ersten Messmodus die Strahlungsdauer der UV-Strahlungsquelle innerhalb des Messraums basierend auf der Dauer der Versorgung der UV-Strahlungsquelle durch die elektronische Versorgungseinheit bestimmt werden, wobei zu Beginn der Versorgung der UV-Strahlungsquelle durch die elektronische Versorgungseinheit der erste Verschluss im geschlossenen Zustand ist und nach einer ersten vorgebbaren Zeitdauer, welche vorzugsweise der Aufwärmdauer der UV-Strahlungsquelle entspricht, in den geöffneten Zustand schaltet, und wobei vorzugsweise nach einer zweiten vorgebbaren Zeitdauer die Versorgung der UV-Strahlungsquelle durch die elektronische Versorgungseinheit beendet wird und/oder der erste Verschluss in den geschlossenen Zustand schaltet.

Vorteilhafterweise kann die erste vorgebbare Zeitdauer auf einer Aufwärmdauer der UV-Strahlungsquelle basieren. Insbesondere kann die Vorrichtung dazu ausgelegt sein, die erste vorgebbare Zeitdauer anhand der verwendeten UV-Strahlungsquelle einzustellen. Ferner kann die zweite vorgebbare Zeitdauer auf einer für die Intensitätsmessung notwendigen Zeitdauer basieren, welche durch den verwendeten UV-Sensor bestimmt wird. Vorteilhafterweise kann die Vorrichtung dazu ausgelegt sein, den verwendeten ersten UV-Sensor abzufragen und die zweite Zeitdauer entsprechend dem ermittelten UV-Sensor vorzugeben. Alternativ kann auch ein Nutzer eine Dauer für die erste vorgebbare Zeitdauer und/oder die zweite vorgebbare Zeitdauer vorgeben.

Vorzugsweise kann die Aufnahmeeinheit einen optischen Sensor aufweisen, der dazu ausgelegt ist, im zweiten Messmodus ein Beginn der Strahlungsdauer der UV-Strahlungsquelle innerhalb des Messraums zu detektieren, wobei im zweiten Messmodus zu Beginn der Strahlungsdauer der erste Verschluss im geschlossenen Zustand ist und nach einer dritten vorgebbaren Zeitdauer in den geöffneten Zustand schaltet, und wobei vorzugsweise nach einer vierten vorgebbaren Zeitdauer der erste Verschluss in den geschlossenen Zustand schaltet und/oder die Vorrichtung ein Signal ausgibt, welches signalisiert, die Versorgung der UV-Strahlungsquelle durch die externe Aushärtevorrichtung zu beenden.

Vorteilhafterweise erlaubt das Vorsehen des optischen Sensors, dass im zweiten Messmodus der Beginn der Strahlungsdauer, welcher nicht durch eine Versorgung über die elektronische Versorgungseinheit erkannt wird, detektiert wird. Vielmehr wird im zweiten Messmodus der Beginn der Strahlungsdauer durch Aktivierung der Aushärtevorrichtung, welche die UV-Strahlungsquelle betreibt, bestimmt. Die dritte vorgebbare Zeitdauer kann insbesondere der ersten vorgebbaren Zeitdauer entsprechen und entsprechend vorgegeben werden. Ferner kann die vierte vorgebbare Zeitdauer der zweiten vorgegebenen Zeitdauer entsprechen und gemäß der zweiten vorgebbaren Zeitdauer vorgegeben werden.

Vorzugsweisen kann die Aufnahmeeinheit einen zweiten UV-Sensor zur Messung der Intensität von der durch die UV-Strahlungsquelle erzeugten UV-Strahlung aufweisen, wobei die Aufnahmeeinheit bevorzugt einen zweiten Verschluss, der dem zweiten UV-Sensor zugeordnet ist, aufweist, wobei in einem geöffneten Zustand des zweiten Verschlusses, der zweite UV-Sensor der UV-Strahlung der UV-Strahlungsquelle ausgesetzt ist, und wobei in einem geschlossenen Zustand des zweiten Verschlusses, der zweite UV-Sensor durch den zweiten Verschluss von der UV-Strahlung der UV-Strahlungsquelle abgeschirmt ist.

Vorteilhafterweise ist der zweite Verschluss wie der erste Verschluss steuerbar. D. h., der zweite Verschluss kann für eine Aufwärmdauer der UV-Strahlungsquelle geschlossen sein und für die eigentliche Intensitätsmessung geöffnet werden. Insbesondere kann die Zeitdauer, für die jeweils der erste Verschluss und der zweite Verschluss geöffnet ist, gleich sein. Alternativ kann die Zeitdauer, für die der erste Verschluss und der zweite Verschluss geöffnet ist, unterschiedlich sein. Insbesondere können der erste UV-Sensor und der zweite UV-Sensor unterschiedliche Zeitdauern benötigen, um die Intensitätsmessung der UV-Strahlungsquelle durchzuführen. Entsprechend kann die Öffnungszeit des ersten Verschlusses und des zweiten Verschlusses auf den jeweiligen UV-Sensor abgestimmt werden.

Vorzugsweise kann der erste UV-Sensor zur Erfassung eines ersten Wellenlängenbereichs ausgelegt sein, wobei der erste UV-Sensor vorzugsweise für den ersten Wellenlängenbereich kalibriert ist. Kalibriert bedeutet, dass der UV-Sensor vermessen wurde, um sicherzustellen, dass das Ausgabesignal des UV-Sensors basierend auf der durch den UV-Sensor gemessenen Intensität korrekt ist.

Vorzugsweise kann der zweite UV-Sensor zur Erfassung eines zweiten Wellenlängenbereichs ausgelegt sein, wobei der zweite UV-Sensor vorzugsweise für den zweiten Wellenlängenbereich kalibriert ist. Vorzugsweise kann der erste Wellenlängenbereich unterschiedlich zu dem zweiten Wellenlängenbereich sein. Insbesondere kann der erste Wellenlängenbereich des ersten UV-Sensors ein Spektralbereich von ungefähr 227 nm bis 360 nm umfassen und/oder der zweite Wellenlängenbereich des zweiten UV-Sensors kann ein Spektralbereich von ungefähr 240 nm bis 560 nm umfassen. Insbesondere kann der zweite UV-Sensor ein auf Galliumphosphid (GaP) basierender UV-Sensor sein.

Vorzugsweise kann die Vorrichtung eine mit der Aufnahmeeinheit kommunikativ verbindbare Kontrolleinheit zur Steuerung der Intensitätsmessung aufweisen. Insbesondere kann die Kontrolleinheit mittels einer Datenübertragungsschnittstelle mit der Aufnahmeeinheit kommunikativ verbindbar sein. Beispielsweise kann die Kontrolleinheit mittels einer seriellen oder parallelen kabelgebundenen Datenverbindung mit der Aufnahmeeinheit verbindbar sein. Alternativ kann die Kontrolleinheit auch kabellos mit der Aufnahmeeinheit kommunizieren, bspw. über Wireless Lan und/oder Bluetooth.

Insbesondere kann die Kontrolleinheit eine elektrische Leistung vorgeben, mit der die elektronische Versorgungseinheit der Aufnahmeeinheit die UV-Strahlungsquelle im ersten Messmodus versorgt. Ferner kann die Kontrolleinheit eine grafische Nutzerschnittstelle aufweisen, welche die Messergebnisse der Intensitätsmessung des ersten UV-Sensors und/oder des zweiten UV-Sensors anzeigt. Ferner kann ein Nutzer mittels der Kontrolleinheit zumindest eine der ersten bis vierten vorgebbaren Zeitdauern vorgeben bzw. eingeben. Alternativ können die erste bis vierte vorgegebene Zeitdauer in der Kontrolleinheit hinterlegt sein oder durch die Kontrolleinheit anhand der verwendeten UV-Sensoren und UV-Strahlungsquelle basierend auf in der Kontrolleinheit hinterlegten Daten ermittelt werden.

Vorzugsweise ist die Kontrolleinheit dazu ausgelegt ist, die Intensitätsmessung der UV-Strahlungsquelle zu protokollieren und in einem Datensatz, der vorzugsweise nicht manipulierbar ist, abzuspeichern, wobei der Datensatz vorzugsweise eine eindeutige Identifikation der UV-Strahlungsquelle, bspw. eine Seriennummer, und die gemessene Intensität enthält. Ferner können Datum und Zeit der durchgeführten Intensitätsmessung in dem Datensatz gespeichert werden. Durch die Manipulationssicherheit des Datensatzes kann gewährleistet werden, dass eine ordnungsgemäße Durchführung einer Kanalsanierung belegt werden kann.

Vorzugsweise kann die Aufnahmeeinheit als verschließbares Gehäuse ausgebildet sein, in welchem der Messraum angeordnet ist,
wobei in einem geöffneten Zustand des Gehäuses die UV-Strahlungsquelle in dem Messraum anordenbar ist,
wobei in einem geschlossenen Zustand des Gehäuses der Messraum im Wesentlichen lichtdicht abgeschirmt ist, und
wobei das Gehäuse mindestens eine Versorgungsöffnung zu dem Messraum aufweist, wobei die Versorgungsöffnung im geschlossenen Zustand des Gehäuses eine Verbindung der in dem Messraum befindlichen UV-Strahlungsquelle mit der externen Aushärtevorrichtung ermöglicht.

Des Weiteren kann die Aufnahmeeinheit einen Endschalter aufweisen, der dazu ausgelegt ist zu detektieren, ob das Gehäuse geschlossen oder geöffnet ist. Ferner ist die elektronische Versorgungseinheit dazu ausgelegt, die UV-Strahlungsquelle erst mit Betriebsstrom bzw. Betriebsspannung zu versorgen, wenn der Endschalter detektiert, dass das Gehäuse geschlossen ist.

Des Weiteren kann die mindestens eine Versorgungsöffnung derart ausgelegt sein, dass durch die Versorgungsöffnung keine UV-Strahlung austreten kann, wenn die UV-Strahlungsquelle in dem Messraum betrieben wird. Insbesondere kann die Versorgungsöffnung eine Anordnung von lichtdichten Bürsten aufweisen, durch welche Verbindungsmittel, welche die UV-Strahlungsquelle mit der externen Aushärtevorrichtung verbindet, durchgeführt sind.

Vorzugsweise kann der UV-Strahlungsquellenanschluss abhängig von der zu messenden UV-Strahlungsquelle wechselbar und/oder austauschbar sein. Vorteilhafterweise können somit verschiedene Typen von UV-Strahlungsquellen gemessen werden.

Vorzugsweise kann die Aufnahmeeinheit ein Positionierungsmittel aufweisen, welches dazu ausgebildet ist, die UV-Strahlungsquelle relativ zu dem ersten UV-Sensor und/oder zweiten UV-Sensor zu positionieren. Bevorzugt sind der erste UV-Sensor und der zweite UV-Sensor in Bezug auf die UV-Strahlungsquelle gegenüberliegend an der Aufnahmeeinheit angeordnet. Insbesondere erlaubt das Positionierungsmittel, dass die UV-Strahlungsquelle zwischen dem ersten UV-Sensor und dem zweiten UV-Sensor zentriert wird, wodurch eine optimale Ausrichtung der UV-Strahlungsquelle für die Intensitätsmessung gewährleistet ist. Beispielsweise kann die UV-Strahlungsquelle auf einem Schlitten, welcher relativ zu dem ersten und/oder zweiten UV-Sensor bewegbar ist, angeordnet sein, wodurch die UV-Strahlungsquelle in verschiedenen Positionen innerhalb des Messraums positioniert werden kann.

Ein zweiter Aspekt, der nicht unter die beanspruchte Erfindung fällt, betrifft eine Vorrichtung zur Intensitätsmessung von der durch eine UV-Strahlungsquelle, insbesondere von einer UV-Strahlungsquelle für Kanalsanierungsarbeiten, erzeugten UV-Strahlung, wobei die Vorrichtung aufweist:
- eine Aufnahmeeinheit mit einem Messraum zum Aufnehmen der UV-Strahlungsquelle während der Intensitätsmessung,

wobei die Aufnahmeeinheit einen ersten UV-Sensor zur Messung der Intensität von der durch die UV-Strahlungsquelle erzeugten UV-Strahlung aufweist,
wobei die Aufnahmeeinheit einen ersten Verschluss aufweist, der dem ersten UV-Sensor zugeordnet ist, wobei in einem geöffneten Zustand des ersten Verschlusses, der erste UV-Sensor der UV-Strahlung der UV-Strahlungsquelle ausgesetzt ist,
wobei in einem geschlossenen Zustand des ersten Verschlusses, der erste UV-Sensor von der UV-Strahlung der UV-Strahlungsquelle abgeschirmt ist, und
wobei die Vorrichtung dazu ausgelegt ist, den Zustand des ersten Verschlusses in Abhängigkeit von einer Strahlungsdauer der UV-Strahlungsquelle innerhalb des Messraums zu steuern.

Vorteilhafterweise kann die Vorrichtung des zweiten Aspekts gemäß dem ersten Aspekt fortgebildet sein.

Ein dritter Aspekt betrifft ein Verfahren zur Intensitätsmessung von der durch eine UV-Strahlungsquelle, insbesondere von einer UV-Strahlungsquelle für Kanalsanierungsarbeiten, erzeugten UV-Strahlung, wobei das Verfahren folgende Schritte aufweist:
- Verbinden einer UV-Strahlungsquelle mit einem UV-Strahlungsquellenanschluss einer Vorrichtung nach dem ersten Aspekt,
- Betreiben der UV-Strahlungsquelle an dem UV-Strahlungsquellenanschluss,
- Durchführen einer Intensitätsmessung der UV-Strahlungsquelle, wobei das Verfahren insbesondere weiter aufweist:
- Entnehmen der UV-Strahlungsquelle aus dem Messraum;
- Anordnen einer mit einer externen Aushärtevorrichtung verbundenen UV-Strahlungsquelle in dem Messraum,
- Durchführen einer Intensitätsmessung der UV-Strahlungsquelle, die durch die externe Aushärtevorrichtung betrieben wird.

Das Verfahren gemäß dem dritten Aspekt kann durch Merkmale des ersten oder zweiten Aspekts fortgebildet sein. Insbesondere kann das Verfahren vorsehen, dass die Ergebnisse der Intensitätsmessung protokolliert werden.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Element sind in allen Figuren mit den gleichen Bezugszeichen versehen. Es zeigen:
- Figur 1: eine perspektivische Darstellung einer Vorrichtung zur Intensitätsmessung,
- Figur 2: eine Aufnahmeeinheit der Vorrichtung zur Intensitätsmessung,
- Figur 3: die Aufnahmeeinheit mit einer UV-Strahlungsquelle, die mit einer Aushärtevorrichtung gekoppelt ist,
- Figur 4: eine perspektivische Darstellung des Verschlusses.
- Figur 5A: einen Verschluss der Aufnahmeeinheit im geöffneten Zustand,
- Figur 5B: den Verschluss der Aufnahmeeinheit im geschlossenen Zustand,

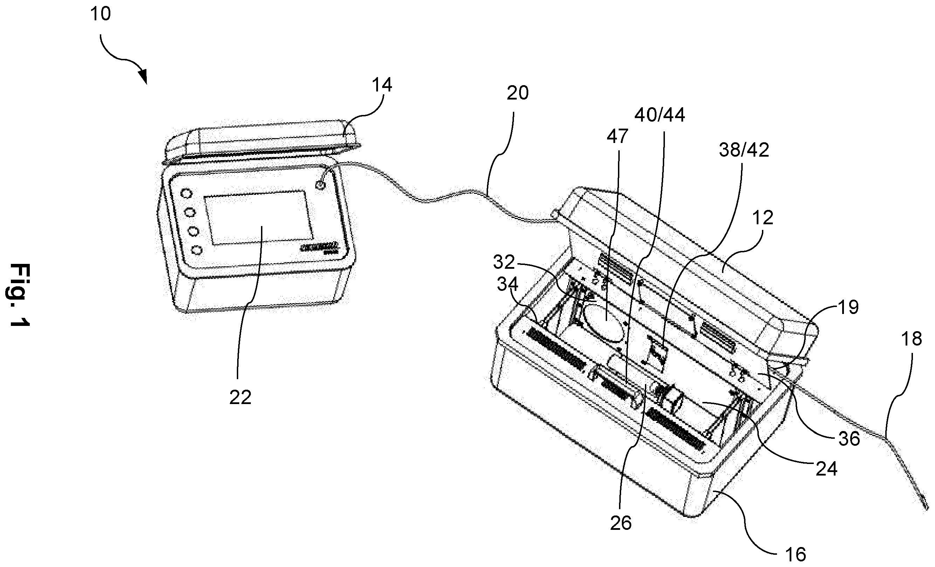

**Figur 1** zeigt eine Vorrichtung zur Intensitätsmessung 10 für die Messung der von einer eine UV-Strahlungsquelle, insbesondere von einer UV-Strahlungsquelle für Kanalsanierungsarbeiten, emittierten UV-Strahlung (Ultraviolette Strahlung). Die Vorrichtung zur Intensitätsmessung 10 weist eine Aufnahmeeinheit 12 und eine Kontrolleinheit 14, welche mit der Aufnahmeeinheit 12 kommunikativ verbindbar ist auf. Unter kommunikativ verbindbar wird verstanden, dass die Kontrolleinheit 14 und die Aufnahmeeinheit 12 Daten und/oder Steuersignale miteinander austauschen können. Bei dem in Figur 1 gezeigten Beispiel erfolgt die Kommunikation zwischen der Kontrolleinheit 14 und der Aufnahmeeinheit 12 kabelgebunden über ein Datenverbindungskabel 20. Die Kommunikation zwischen der Kontrolleinheit 14 und Aufnahmeeinheit 12 kann dabei seriell oder parallel erfolgen. Alternativ kann die Kommunikation zwischen der Kontrolleinheit 14 und der Aufnahmeeinheit 12 auch kabellos erfolgen, beispielsweise über Wireless-LAN und/oder Bluetooth.

Zur Spannungsversorgung der Vorrichtung 10 bzw. der Aufnahmeeinheit 12, kann die Aufnahmeeinheit 12 mittels eines Spannungsversorgungskabels 18 mit einer externen Spannungsversorgungsquelle, beispielsweise einer 110 VAC oder 230 VAC Quelle gekoppelt werden, wobei die Aufnahmeeinheit 12 hierzu einen entsprechenden Spannungsversorgungsanschluss 19, an dem das Spannungsversorgungskabel 18 angeschlossen werden kann, aufweist. Alternativ oder optional kann die Aufnahmeeinheit 12 einen integrierten Energiespeicher aufweisen, der die Aufnahmeeinheit 12 mit einer Betriebsspannung versorgt.

Des Weiteren weist die Vorrichtung zur Intensitätsmessung 10 einen Koffer 16 auf, in dem die Aufnahmeeinheit 12 angeordnet werden kann. Der Koffer 16 dient insbesondere zum Schutz der Aufnahmeeinheit 12 während des Transports der Vorrichtung zur Intensitätsmessung 10. Insbesondere ist der Koffer 16 verschließbar und umschließt die Aufnahmeeinheit 12 vollständig im geschlossenen Zustand des Koffers 16. Zur Durchführung der Intensitätsmessung kann die Aufnahmeeinheit 12 aus dem Koffer 16 entnommen werden.

Die Kontrolleinheit 14 kann ferner eine grafische Nutzerschnittstelle 22 aufweisen, um beispielsweise die Intensitätsmessung durchzuführen und/oder die Vorrichtung zur Intensitätsmessung 10 zu konfigurieren. Des Weiteren kann die Kontrolleinheit 14 als verschließbarer Koffer ausgebildet sein, wobei im geschlossenen Zustand des Koffers die grafische Nutzerschnittstellen 22 nicht zugänglich und somit geschützt ist. Dagegen kann im geöffneten Zustand des Koffers die grafische Nutzerschnittstelle 22 für einen Nutzer zugänglich sein.

Zur Durchführung der Intensitätsmessung weist die Aufnahmeeinheit 12 einen Messraum 24 auf, in dem eine UV-Strahlungsquelle 26 angeordnet werden kann. Die Aufnahmeeinheit 12 ist derart ausgebildet, dass der Messraum 24 für die Durchführung der Intensitätsmessung im Wesentlichen lichtdicht verschließbar ist. Vorteilhafterweise kann somit ein Austreten von UV-Strahlung aus dem Messraum 24 verhindert werden.

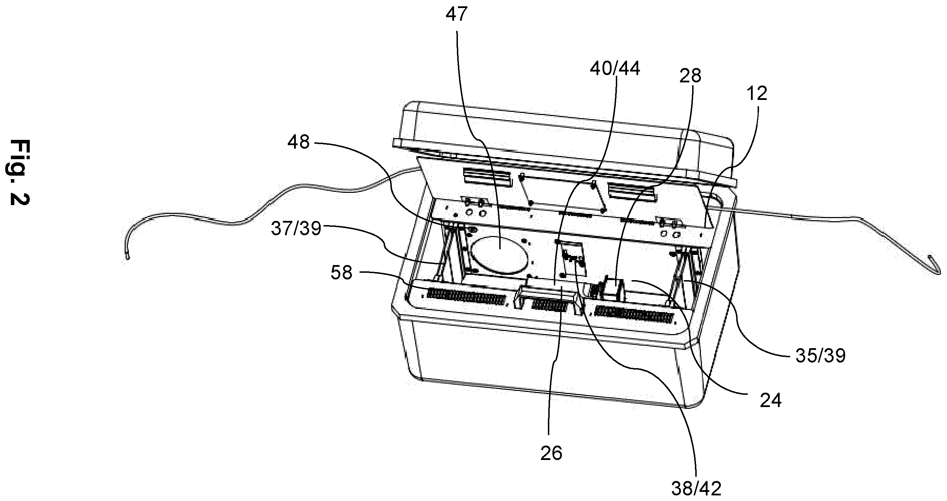

Die Vorrichtung zur Intensitätsmessung 10 weist insbesondere zwei Messmodi auf. In einem ersten Messmodus, wie in den **Figuren 1** **und** **2** dargestellt, kann die Intensität der UV-Strahlung einer einzelnen UV-Strahlungsquelle 26 durch die Vorrichtung 10 gemessen werden. Wie in den Figuren 1 und 2 dargestellt, ist in dem Messraum 24 ein UV-Strahlungsquellenanschluss 28 vorgesehen, mit dem die (einzelne) UV-Strahlungsquelle 26 verbindbar ist, um die UV-Strahlungsquelle 26 mit Betriebsspannung bzw. Betriebsstrom durch die Aufnahmeeinheit 12 zu versorgen. Mit anderen Worten, in dem ersten Messmodus wird die UV-Strahlungsquelle 26 durch die Aufnahmeeinheit 12 selbst mit Betriebsspannung bzw. Betriebsstrom versorgt. Ferner kann die UV-Strahlungsquelle 26 von dem UV-Strahlungsquellenanschluss 28 gelöst werden.

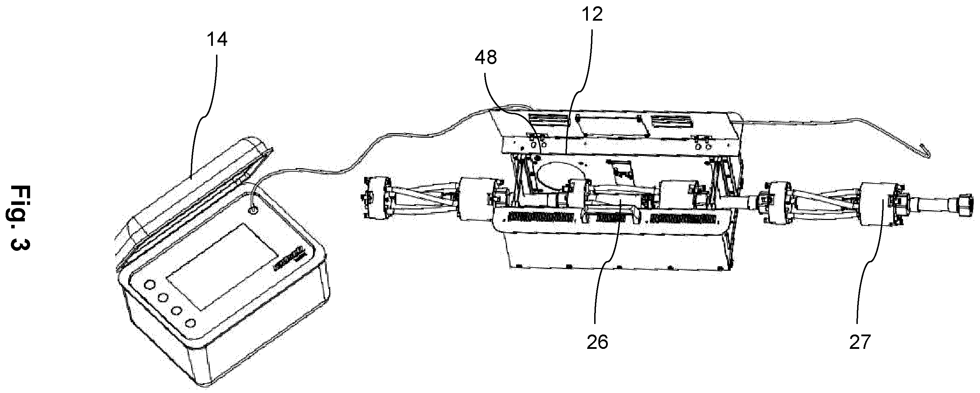

In einem zweiten Messmodus, der unter Bezugnahme auf **Figur** 3 näher erläutert wird, erfolgt die Versorgung der UV-Strahlungsquelle nicht durch die Aufnahmeeinheit 12, sondern durch eine externe Vorrichtung, insbesondere eine Aushärtevorrichtung 27, an der die UV-Strahlungsquelle 26 betrieben wird bzw. mit der die UV-Strahlungsquelle 26 gekoppelt ist.

Die Aushärtevorrichtung 27 weist eine oder mehrere UV-Strahlungsquellen 26 auf, welche (räumlich) hintereinander angeordnet sind. Dabei können die eine oder mehrere UV-Strahlungsquellen 26 an der Aushärtevorrichtung seriell, bevorzugt elektrisch parallel betrieben werden. Bei der Aushärtevorrichtung 27 handelt es sich insbesondere um eine Aushärtevorrichtung 27, welche zur Sanierung von Kanälen verwendet wird. Insbesondere wird die Aushärtevorrichtung 27 zur Aushärtung von Kanalsanierungsmitteln, welche zumindest teilweise aus einem UV-härtbaren Material bestehen und welche für Kanalsanierungsarbeiten verwendet werden, bspw. Liner, verwendet.

Die Unterstützung der zuvor beschriebenen zwei Messmodi ermöglicht vorteilhafterweise, dass im ersten Messmodus die UV-Strahlungsquelle 26 isoliert gemessen werden kann und im zweiten Messmodus im Betrieb an der später verwendeten Aushärtevorrichtung 27 gemessen werden kann. Vorteilhafterweise ist es somit möglich Intensitätsverluste, welche durch die Aushärtevorrichtung 27 verursacht werden, zu erkennen. Folglich kann für die spätere Durchführung der Kanalsanierungsarbeiten ein ausreichender Energieeintrag in das Kanalsanierungsmittel sichergestellt werden, beispielsweise durch Anpassung der Bestrahlungsdauer. Beispielsweise kann bei der Feststellung, dass die Intensität der UV-Strahlungsquelle 26 an der Aushärtevorrichtung 27 zu niedrig ist, die Bestrahlungsdauer des Kanalsanierungsmittels durch die UV-Strahlungsquelle 26 erhöht werden.

Wie in Figur 1 dargestellt, kann der Messraum 24 durch eine Bodenfläche bzw. - wand 30, welche sich im bestimmungsgemäßen Gebrauch der Vorrichtung zur Intensitätsmessung 10 im Wesentlichen horizontal erstreckt, eine erste und zweite Seitenfläche bzw. -wand 32 und 34, welche gegenüberliegend angeordnet sind, und eine Abdeckfläche bzw. -wand 36, begrenzt sein. Ferner stehen die erste und zweite Seitenflächen 32 und 34 im Wesentlichen senkrecht zur Bodenfläche 30 und Abdeckfläche 36, wenn der Messraum 24 geschlossen ist. Im geschlossenen Zustand des Messraums 24 ist die Abdeckfläche 36 der Bodenfläche 30 gegenüberliegend angeordnet. Die Abdeckfläche 36 kann beweglich, beispielsweise als Abdeckung, ausgebildet sein, um den Messraum 24 zur Anordnung der UV-Strahlungsquelle 26 in dem Messraum 24 zu öffnen.

Ferner weist der Messraum 24 eine erste Versorgungsöffnung 35 und eine zweite Versorgungsöffnung 37 auf, welche ermöglichen, dass einer mit der Aushärtevorrichtung 27 gekoppelte bzw. verbundene UV-Strahlungsquelle 26 in den Messraum 24 einführbar ist. Des Weiteren können die erste Versorgungsöffnung 35 und die zweite Versorgungsöffnung 37 jeweils lichtdichte Bürsten 39 aufweisen, die verhindern, dass UV-Strahlung aus dem Messraum 24 dringen kann. Die erste und zweite Versorgungsöffnung 35 und 37 können insbesondere gegenüberliegend angeordnet sein, wobei die UV-Strahlungsquelle 26 zwischen der ersten und zweiten Versorgungsöffnung 35 und 37 anordenbar ist.

Für die Messung der Intensität der UV-Strahlung ist an dem Messraum 24 ein erster UV-Sensor 38 angeordnet. Der erste UV-Sensor 38 kann insbesondere in der ersten Seitenfläche 32 angeordnet sein und in Richtung einer in dem Messraum 24 positionierten UV-Strahlungsquelle 26 weisen. Des Weiteren kann die Aufnahmeeinheit 12 einen zweiten UV-Sensor 40 (in den Figuren lediglich angedeutet) aufweisen, der an der zweiten Seitenflächen 34 angeordnet sein kann. Vorteilhafterweise sind der erste UV-Sensor 38 und der zweite UV-Sensor 40 in Bezug auf die UV-Strahlungsquelle 26 gegenüberliegend angeordnet.

Dem ersten UV-Sensor 38 ist ferner ein erster Verschluss 42 zugeordnet. Der erste Verschluss 42 ist dazu ausgelegt, einen geöffneten Zustand und einen geschlossenen Zustand aufzuweisen. In dem geöffneten Zustand des ersten Verschlusses 42 ist der erste UV-Sensor 38 der UV-Strahlung der UV-Strahlungsquelle 26 ausgesetzt. In dem geschlossenen Zustand des ersten Verschlusses 42 ist der erste UV-Sensor 38 von der UV-Strahlung der UV-Strahlungsquelle 26 abgeschirmt bzw. dieser nicht ausgesetzt. Der zweite Verschluss 44 ist entsprechend dem ersten Verschluss 40 ausgebildet und ermöglicht im geöffneten Zustand, dass der zweite UV-Sensor 40 der UV-Strahlung der UV-Strahlungsquelle 26 ausgesetzt ist. Ferner ermöglicht der zweite Verschluss 44 im geschlossenen Zustand, dass der zweite UV-Sensor 44 von der UV-Strahlung der UV-Strahlungsquelle 26 abgeschirmt ist.

Vorteilhafterweise ermöglicht die Aufnahmeeinheit 12, dass das Öffnen und Schließen des ersten und zweiten Verschlusses 42 und 44 in Abhängigkeit von einer Leuchtdauer der UV-Strahlungsquelle 26 im Messraum 24 erfolgt. Insbesondere kann die Aufnahmeeinheit 12 den ersten und zweiten Verschluss 42 und 44 derart steuern, dass zu Beginn einer Aktivierung der UV-Strahlungsquelle 26 der erste Verschluss 42 und der zweite Verschluss 44 geschlossen sind. Mit anderen Worten, zu Beginn der Aktivierung der UV-Strahlungsquelle 26 sind der erste UV-Sensor 38 und der zweite UV-Sensor 40 von der durch die UV-Strahlungsquelle 26 erzeugten UV-Strahlung abgeschirmt. Erst nach einer ersten vorgebbaren Zeitdauer erfolgt das Öffnen des ersten Verschlusses 42 und des zweiten Verschlusses 44. Die erste vorgebbare Zeitdauer kann insbesondere auf einer benötigten Aufwärmdauer der UV-Strahlungsquelle 26 basieren. Unter Aufwärmdauer wird die Zeitdauer verstanden, die die Strahlungsquelle 26 benötigt, um ein stabiles bzw. gleichbleibenden Intensitätsniveau zu erreichen und wird regelmäßig durch den Hersteller der UV-Strahlungsquelle 26 angegeben. Die Aufwärmdauer einer UV-Strahlungsquelle 26 kann beispielsweise ca. 2 Minuten betragen.

Nachdem die UV-Strahlungsquelle 26 die erste vorgebbare Zeitdauer betrieben wurde, erfolgt sowohl im ersten Messmodus als auch im zweiten Messmodus das Öffnen des ersten und zweiten Verschlusses 42 und 44. Dabei können der erste Verschluss 42 und der zweite Verschluss 44 für eine zweite vorgebbare Zeitdauer offengehalten werden, wobei nach Ablauf der zweiten vorgebbaren Zeitdauer der erste und zweite Verschluss 42 und 44 wieder geschlossen wird. Während der zweiten vorgebbaren Zeitdauer kann die eigentliche Intensitätsmessung der von der UV-Strahlungsquelle 26 emittierten UV-Strahlung erfolgen. Diese zweite vorgebbare Zeitdauer kann beispielsweise 3 Sekunden betragen und ist vorzugsweise einstellbar. Beispielsweise kann die Kontrolleinheit 14 bestimmen, welche UV-Sensoren als erste UV-Sensor 38 und als zweiter UV-Sensor 40 genutzt werden, und entsprechend den genutzten UV-Sensoren die zweite vorgebbare Zeitdauer einstellen. Ferner kann die Kontrolleinheit 14 die erste vorgebbare Zeitdauer entsprechend der zu messenden UV-Strahlungsquelle 26 einstellen. Insbesondere kann die erste vorgebbare Zeitdauer größer als die zweite vorgebbare Zeitdauer.

Vorteilhafterweise ermöglicht das Öffnen bzw. Schließen des ersten und zweiten Verschlusses 42 und 44, dass die jeweiligen UV-Sensoren 38 und 40 nur kurz der UV-Strahlung ausgesetzt werden, sodass eine unnötige Alterung des ersten und des zweiten UV-Sensors 38 und 40 vermieden werden kann. Insbesondere können der erste UV-Sensor 38 und der zweite UV-Sensor 40 kalibrierte UV-Sensoren sein, welche hohe Anschaffungskosten aufweisen.

Ferner kann der erste UV-Sensor 38 zur Erfassung eines ersten

Wellenlängenbereichs ausgelegt sein und der zweite UV-Sensor 40 zur Erfassung eines zweiten Wellenlängenbereichs ausgelegt sein. Insbesondere kann der erste Wellenlängenbereich des ersten UV-Sensors 38 einen Spektralbereich 227 nm bis 360 nm umfassen und/oder der zweite Wellenlängenbereich des zweiten UV-Sensors kann ein Spektralbereich von ungefähr 240 nm bis 560 nm umfassen. Ferner kann der zweite UV-Sensor 40 ein auf Galliumphosphid (GaP) basierender UV-Sensor sein.

Für den ersten Messmodus, welcher in den Figuren 1 und 2 dargestellt ist, erfolgt die Versorgung der UV-Strahlungsquelle 26 mit Betriebsstrom bzw. Betriebsspannung über eine in die Aufnahmeeinheit 12 integrierte elektronische Versorgungseinheit. Die elektronische Versorgungseinheit ist dazu ausgelegt, die UV-Strahlungsquelle 26 mit einer entsprechenden elektrischen Leistung zu versorgen. Die UV-Strahlungsquelle 26 kann eine elektrische Leistungsaufnahme von mindestens 50 W, bevorzugt mindestens 100 W und besonders bevorzugt von mindestens 250 W aufweisen. Bspw. kann die Leistungsaufnahme der UV-Strahlungsquelle 26 auch 1000 W oder höher betragen. Entsprechend kann die elektronische Versorgungseinheit dazu ausgelegt sein, eine für die UV-Strahlungsquelle 26 ausreichende elektrische Leistung bereitzustellen. Bevorzugt kann die durch die Aufnahmeeinheit 10 bereitgestellte elektrische Leistung zwischen 200 W bis 1200 W betragen. Des Weiteren kann die elektrische Leistung, welche die elektronische Versorgungseinheit ausgibt, durch die Kontrolleinheit 14 vorgebbar sein. Insbesondere kann ein Nutzer die elektrische Leistung an der Kontrolleinheit 14 einstellen.

Des Weiteren kann die Ermittlung der Strahlungsdauer der UV-Strahlungsquelle 26, in deren Abhängigkeit der erste Verschluss 42 und der zweite Verschluss 44 gesteuert wird, insbesondere durch die elektronische Versorgungseinheit bzw. den Beginn der Versorgung der UV-Strahlungsquelle 26 durch die elektronische Versorgungseinheit erfolgen.

Für die Durchführung des zweiten Messmodus, kann die Aufnahmeeinheit 12 einen optischen Sensor 48 aufweisen. Der optische Sensor 48 ist derart ausgelegt und an dem Messraum 24 angeordnet, um zu detektieren, ob die UV-Strahlungsquelle 26, welche durch die externe Aushärtevorrichtung 27 betrieben wird, UV-Strahlung emittiert. D. h. im zweiten Messmodus kann der Beginn der Strahlungsdauer durch eine entsprechende Detektion des optischen Sensors 48 erfolgen. Alternativ kann die Aushärtevorrichtung 27 dazu ausgebildet sein, mit der Kontrolleinheit 14 kommunikativ verbunden zu werden, so dass die Aushärtevorrichtung 27 einen Beginn der Strahlungsdauer der UV-Strahlungsquelle 26 bzw. eine Aktivierung der UV-Strahlungsquelle 26 an die Kontrolleinheit 14 kommuniziert.

Vorteilhafterweise kann der UV-Strahlungsquellenanschluss 28, an dem die UV-Strahlungsquelle 26 angeschlossen wird, aus dem Messraum 24 entnehmbar sein. Des Weiteren können unterschiedliche UV-Strahlungsquellenanschlüsse 28 mit der Aufnahmeeinheit 12 verbindbar sein, um unterschiedliche Typen von UV-Strahlungsquellen zu unterstützen.

Ferner kann zur Durchführung des zweiten Messmodus der UV-Strahlungsquellenanschluss 28 aus dem Messraum 24 entnommen werden und für den zweiten Messmodus kann die UV-Strahlungsquelle 26 auf einen oder mehreren in dem Messraum 24 angeordneten Auflagepunkten 49 aufgelegt werden. Des Weiteren kann die Aufnahmeeinheit 12 derart ausgebildet sein, dass die Position der UV-Strahlungsquelle 26 innerhalb des Messraums 24 in Bezug auf den ersten UV-Sensor 38 und/oder den zweiten UV-Sensor 40 positionierbar ist. Vorteilhafterweise kann somit eine günstige Ausrichtung der UV-Strahlungsquelle 26 gegenüber dem ersten UV-Sensor 38 und dem zweiten UV-Sensor 44 ermöglicht werden. Beispielsweise kann der UV-Strahlungsquellenanschluss 28 in Längsrichtung des Messraums 24 bewegbar sein. Des Weiteren können die Auflagepunkte 49, auf denen die UV-Strahlungsquelle 26 aufliegt, in Längsrichtung des Messraum 24 beweglich sein, um die UV-Strahlungsquelle 26 in Bezug auf den ersten UV-Sensor 38 und/oder zweiten UV-Sensor 40 zu positionieren.

Des Weiteren kann der Messraum 24 eine Belüftungseinheit 47 aufweisen, welche beispielsweise in der ersten und/oder zweiten Seitenfläche 32/34 angeordnet ist. Die Belüftungseinheit kann insbesondere als aktive Belüftungseinheit 47, beispielsweise als Lüfter ausgebildet sein, um Wärme, welche während der Intensitätsmessung entsteht, abzutransportieren. Vorteilhafterweise kann somit eine thermisch verursachte Alterung der UV-Strahlungsquelle 26 und/oder der UV-Sensoren 38 und 40 verlangsamt werden.

Zur Durchführung der Intensitätsmessung kann ein Nutzer die Kontrolleinheit 14 bedienen. Dabei ist die Kontrolleinheit 14 insbesondere dazu ausgelegt, die Ergebnisse einer Intensitätsmessung zu protokollieren und in einem geeigneten Datenformat, welches vorzugsweise nicht manipulierbar ist, abzuspeichern. Die als Datensatz gespeicherten Ergebnisse der Intensitätsmessung beinhalten insbesondere Angaben zur UV-Strahlungsquelle 26, um diese eindeutig zu identifizieren, und Angaben zur ermittelten Intensität der UV-Strahlung. Ferner kann der Datensatz Datum und Zeit der durchgeführten Intensitätsmessung beinhalten.

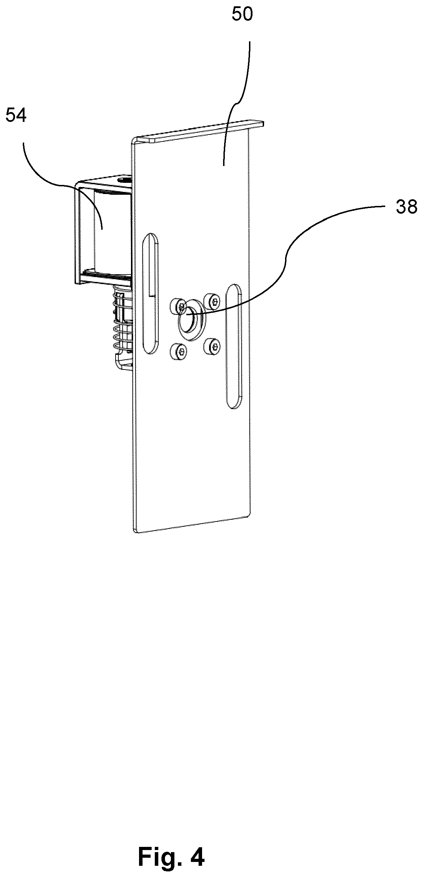

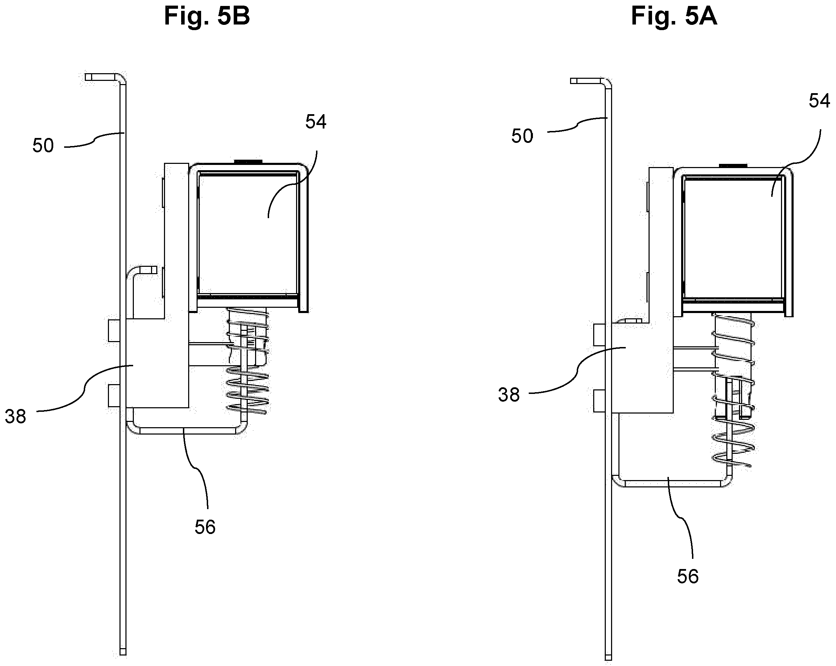

Unter Bezugnahme auf die **Figuren 4****,** **5A und 5B** wird der Aufbau eines Verschlusses beispielhaft für den ersten und zweiten Verschluss 42 und 44 näher erläutert. Der Verschluss 42 weist eine Tragplatte 50 auf, welche in der ersten Seitenfläche 32 und/oder der zweiten Seitenfläche 34 angeordnet werden kann. Ferner weist die Tragplatte 50 eine Öffnung auf, durch welche UV-Strahlung auf den UV-Sensor 38 treffen kann, wenn der Verschluss 42 geöffnet ist. Ferner weist der Verschluss 42 einen elektromagnetischen Betätiger 54 auf, der ein Verschlusselement 56 betätigt. Dabei ist das Verschlusselement 56 zumindest teilweise zwischen der Öffnung 52 und dem UV-Sensor 38 angeordnet. Durch Aktivieren des elektromagnetischen Betätigers 54 ist das Verschlusselement 56 von einem geschlossenen Zustand des Verschlusses 42 in einen geöffneten Zustand des Verschlusses 42 bewegbar. Im geöffneten Zustand des Verschlusses 42 ermöglicht das Verschlusselement 56, dass UV-Strahlung der UV-Strahlungsquelle 26, welche in dem Messraum 24 angeordnet ist, durch die Öffnung 52 auf den UV-Sensor 38 trifft. Im geschlossenen Zustand des UV-Sensors schirmt das Verschlusselement 56 den UV-Sensor 38 von der UV-Strahlung der UV-Strahlungsquelle 26 ab.

Des Weiteren kann die Aufnahmeeinheit 12 einen Kontaktschalter bzw. Endschalter 58 aufweisen. Der Kontaktschalter 58 ist dazu ausgelegt zu detektieren, ob der Messraum 24 geschlossen ist, insbesondere ob die Abdeckfläche 36 geschlossen ist, so dass die UV-Strahlungsquelle 26 nur im geschlossenen Zustand des Messraums 24 durch die elektronische Versorgungseinheit betrieben werden kann.

### Bezugszeichenliste

- 10: Vorrichtung zur Intensitätsmessung
- 12: Aufnahmeeinheit
- 14: Kontrolleinheit
- 16: Koffer
- 18: Spannungsversorgungskabel
- 19: Spannungsversorgunganschluss
- 20: Datenverbindungskabel
- 22: grafischer Nutzerschnittstelle
- 24: Messraum
- 26: UV-Strahlungsquelle
- 27: Aushärtevorrichtung
- 28: UV-Strahlungsquellenanschluss
- 30: Bodenfläche
- 32: erste Seitenfläche
- 34: zweite Seitenfläche
- 35: erste Versorgungsöffnung
- 36: Abdeckfläche
- 37: zweite Versorgungsöffnung
- 38: erster UV-Sensor
- 39: lichtdichte Bürsten
- 40: zweiter UV-Sensor
- 42: erster Verschluss
- 44: zweiter Verschluss
- 47: Belüftungseinheit
- 48: optischer Sensor
- 49: Auflagepunkt
- 50: Tragplatte
- 52: Öffnung
- 54: elektromagnetischer Betätiger
- 56: Verschlusselement
- 58: Kontaktschalter

## Patentansprüche

1. Vorrichtung zur Intensitätsmessung (10) von der durch eine UV-Strahlungsquelle (26) für Kanalsanierungsarbeiten erzeugten UV-Strahlung, wobei die Vorrichtung aufweist:
- eine Aufnahmeeinheit (12) mit einem Messraum (24) zum Aufnehmen der UV-Strahlungsquelle (26) während der Intensitätsmessung,
wobei die Aufnahmeeinheit (12) einen ersten UV-Sensor (38) zur Messung der Intensität von der durch die UV-Strahlungsquelle (26) erzeugten UV-Strahlung aufweist,
wobei die Aufnahmeeinheit (12) einen UV-Strahlungsquellenanschluss (28) aufweist, mit dem die UV-Strahlungsquelle (26) verbindbar ist, um die UV-Strahlungsquelle (26) mit Betriebsspannung bzw. Betriebsstrom zu versorgen,
wobei in einem ersten Messmodus die Vorrichtung dazu ausgelegt ist, die Intensität einer UV-Strahlungsquelle (26) zu messen, indem die UV-Strahlungsquelle (26) in dem Messraum (24) angeordnet ist und an dem UV-Strahlungsquellenanschluss (28) betrieben wird, und
wobei in einem zweiten Messmodus die Vorrichtung dazu ausgelegt ist, die Intensität einer UV-Strahlungsquelle (26) zu messen, indem die UV-Strahlungsquelle (26) in dem Messraum (24) angeordnet ist und nicht durch die Aufnahmeeinheit (12) mit Betriebsspannung bzw. Betriebsstrom versorgt wird, sondern an einer externen Vorrichtung (27) zur Aushärtung von UV-härtbaren Kanalsanierungsmitteln betrieben wird

2. Vorrichtung nach Anspruch 1, wobei die Aufnahmeeinheit (12) einen ersten Verschluss (42) aufweist, der dem ersten UV-Sensor (38) zugeordnet ist,
wobei in einem geöffneten Zustand des ersten Verschlusses (42), der erste UV-Sensor (38) der UV-Strahlung der UV-Strahlungsquelle (26) ausgesetzt ist, und wobei in einem geschlossenen Zustand des ersten Verschlusses (42), der erste UV-Sensor (38) von der UV-Strahlung der UV-Strahlungsquelle abgeschirmt ist.

3. Vorrichtung nach Anspruch 2, wobei die Vorrichtung dazu ausgelegt ist, den Zustand des ersten Verschlusses (42) in Abhängigkeit von einer Strahlungsdauer der UV-Strahlungsquelle (26) innerhalb des Messraums (24) zu steuern, wobei zu Beginn der Strahlungsdauer der erste Verschluss (42) im geschlossenen Zustand ist und nach einer vorgebbaren Zeitdauer in den geöffneten Zustand schaltet.

4. Vorrichtung nach einem der vorangegangenen Ansprüche, wobei die Aufnahmeeinheit (12) eine elektronische Versorgungseinheit aufweist, welche dazu ausgelegt ist, in dem ersten Messmodus die UV-Strahlungsquelle (26) mit der Betriebsspannung bzw. dem Betriebsstrom zu versorgen.

5. Vorrichtung nach Anspruch 4, wobei im ersten Messmodus die Strahlungsdauer der UV-Strahlungsquelle (26) innerhalb des Messraums basierend auf der Dauer der Versorgung der UV-Strahlungsquelle (26) durch die elektronische Versorgungseinheit bestimmt wird,
wobei zu Beginn der Versorgung der UV-Strahlungsquelle (26) durch die elektronische Versorgungseinheit der erste Verschluss (42) im geschlossenen Zustand ist und nach einer ersten vorgebbaren Zeitdauer in den geöffneten Zustand schaltet, und
wobei vorzugsweise nach einer zweiten vorgebbaren Zeitdauer die Versorgung der UV-Strahlungsquelle (26) durch die elektronische Versorgungseinheit beendet wird und/oder der erste Verschluss (42) in den geschlossenen Zustand schaltet.

6. Vorrichtung nach einem der vorangegangenen Ansprüche 3 bis 5, wobei die Aufnahmeeinheit (12) einen optischen Sensor (48) aufweist, der dazu ausgelegt ist, im zweiten Messmodus ein Beginn der Strahlungsdauer der UV-Strahlungsquelle (26) innerhalb des Messraums (24) zu detektieren,
wobei im zweiten Messmodus zu Beginn der Strahlungsdauer der erste Verschluss (42) im geschlossenen Zustand ist und nach einer dritten vorgebbaren Zeitdauer in den geöffneten Zustand schaltet, und
wobei vorzugsweise nach einer vierten vorgebbaren Zeitdauer der erste Verschluss (42) in den geschlossenen Zustand schaltet und/oder die Vorrichtung ein Signal ausgibt, welches signalisiert, die Versorgung der UV-Strahlungsquelle (26) durch die externe Vorrichtung (27) zur Aushärtung von UV-härtbaren Kanalsanierungsmitteln zu beenden.

7. Vorrichtung nach einem der vorangegangenen Ansprüche, wobei die Aufnahmeeinheit (12) einen zweiten UV-Sensor (40) zur Messung der Intensität von der durch die UV-Strahlungsquelle (26) erzeugten UV-Strahlung aufweist, und
wobei die Aufnahmeeinheit (12) bevorzugt einen zweiten Verschluss (44) aufweist, der dem zweiten UV-Sensor (40) zugeordnet ist, wobei in einem geöffneten Zustand des zweiten Verschlusses (44), der zweite UV-Sensor (40) der UV-Strahlung der UV-Strahlungsquelle (26) ausgesetzt ist, und wobei in einem geschlossenen Zustand des zweiten Verschlusses (44), der zweite UV-Sensor (40) von der UV-Strahlung der UV-Strahlungsquelle (26) abgeschirmt ist.

8. Vorrichtung nach einem der vorangegangenen Ansprüche, wobei der erste UV-Sensor (38) zur Erfassung eines ersten Wellenlängenbereichs ausgelegt ist, und wobei vorzugsweise der erste UV-Sensor (38) für den ersten Wellenlängenbereich kalibriert ist.

9. Vorrichtung nach Anspruch 7 oder 8, wobei der zweite UV-Sensor (40) zur Erfassung eines zweiten Wellenlängenbereichs ausgelegt ist, und wobei vorzugsweise der zweite UV-Sensor (40) für den zweiten Wellenlängenbereich kalibriert ist,
und wobei vorzugsweis der erste Wellenlängenbereich und der zweite Wellenlängenbereich unterschiedlich sind.

10. Vorrichtung nach einem der vorangegangenen Ansprüche, weiter aufweisend eine mit der Aufnahmeeinheit (12) kommunikativ verbindbare Kontrolleinheit (14) zur Steuerung der Intensitätsmessung.

11. Vorrichtung nach Anspruch 10, wobei die Kontrolleinheit (14) dazu ausgelegt ist, die Intensitätsmessung der UV-Strahlungsquelle (26) zu protokollieren und in einem Datensatz, der vorzugsweise nicht manipulierbar ist, abzuspeichern, wobei der Datensatz vorzugsweise eine Identifikationsnummer der UV-Strahlungsquelle (26) und die gemessene Intensität enthält.

12. Vorrichtung nach einem der vorangegangenen Ansprüche, wobei die Aufnahmeeinheit (12) als verschließbares Gehäuse ausgebildet ist, in welchem der Messraum (24) angeordnet ist,
wobei in einem geöffneten Zustand des Gehäuses die UV-Strahlungsquelle (26) in dem Messraum (24) anordenbar ist,
wobei in einem geschlossenen Zustand des Gehäuses der Messraum (24) im Wesentlichen lichtdicht abgeschirmt ist, und
wobei das Gehäuse mindestens eine Versorgungsöffnung (35, 37) zu dem Messraum (24) aufweist, wobei die Versorgungsöffnung (35, 37) im geschlossenen Zustand des Gehäuses eine Verbindung der in dem Messraum befindlichen UV-Strahlungsquelle (26) mit der externen Vorrichtung (27) zur Aushärtung von UV-härtbaren Kanalsanierungsmitteln ermöglicht.

13. Vorrichtung nach einem der vorangegangenen Ansprüche, wobei der UV-Strahlungsquellenanschluss (28) abhängig von der zu messenden UV-Strahlungsquelle (26) wechselbar und/oder entnehmbar ist, und/oder
wobei die Aufnahmeeinheit Positionierungsmittel aufweist, welches dazu ausgebildet ist, die UV-Strahlungsquelle (26) relativ zu dem ersten UV-Sensor (38) zu positionieren.

14. Verfahren zur Intensitätsmessung von der durch einer UV-Strahlungsquelle (26) für Kanalsanierungsarbeiten erzeugten UV-Strahlung, wobei das Verfahren folgende Schritte aufweist:
- Verbinden einer UV-Strahlungsquelle (26) mit einem UV-Strahlungsquellenanschluss (18) einer Vorrichtung nach einem der Ansprüche 1 bis 13,
- Betreiben der UV-Strahlungsquelle (26) an dem UV-Strahlungsquellenanschluss,
- Durchführen einer Intensitätsmessung der UV-Strahlungsquelle (26), wobei das Verfahren weiter aufweist:
- Entnehmen der UV-Strahlungsquelle (26) aus dem Messraum (24);
- Anordnen einer mit einer externen Vorrichtung (27) zur Aushärtung von UV-härtbaren Kanalsanierungsmitteln verbundenen UV-Strahlungsquelle (26) in dem Messraum,
- Durchführen einer Intensitätsmessung der UV-Strahlungsquelle (26), die durch die externe Vorrichtung (27) betrieben wird.

## Claims

1. A device for intensity measurement (10) of UV radiation generated by a UV radiation source (26) for sewer rehabilitation work, the device comprising:
- a receiving unit (12) with a measurement chamber (24) for receiving the UV radiation source (26) during the intensity measurement,
wherein the receiving unit (12) comprises a first UV sensor (38) for measuring the intensity of the UV radiation generated by the UV radiation source (26),
the receiving unit (12) having a UV radiation source connection (28) to which the UV radiation source (26) can be connected in order to supply the UV radiation source (26) with operating voltage or operating current,
wherein, in a first measurement mode, the device is configured to measure the intensity of a UV radiation source (26) by arranging the UV radiation source (26) in the measurement chamber (24) and operating it at the UV radiation source connection (28), and
wherein, in a second measurement mode, the device is configured to measure the intensity of a UV radiation source (26) in that the UV radiation source (26) is arranged in the measurement chamber (24) and is not supplied with operating voltage or operating current by the receiving unit (12), but is operated on an external device (27) for curing UV-curable sewer rehabilitation agents.

2. The device according to claim 1, wherein the receiving unit (12) has a first closure (42) which is associated with the first UV sensor (38),
wherein in an opened state of the first closure (42), the first UV sensor (38) is exposed to the UV radiation of the UV radiation source (26), and wherein in a closed state of the first closure (42), the first UV sensor (38) is shielded from the UV radiation of the UV radiation source.

3. The device according to claim 2, wherein the device is configured to control the state of the first closure (42) as a function of a radiation period of the UV radiation source (26) within the measurement chamber (24), wherein at the beginning of the radiation period the first closure (42) is in the closed state and switches to the opened state after a preselectable duration.

4. The device according to any one of the preceding claims, wherein the receiving unit (12) has an electronic supply unit which is configured to supply the UV radiation source (26) with the operating voltage or the operating current in the first measurement mode.

5. The device according to claim 4, wherein in the first measurement mode the radiation period of the UV radiation source (26) within the measurement chamber is determined based on the duration of the supply of the UV radiation source (26) by the electronic supply unit,
wherein the first closure (42) is in the closed state at the beginning of the supply of the UV radiation source (26) by the electronic supply unit and switches to the opened state after a first preselectable duration, and
wherein preferably after a second preselectable duration the supply of the UV radiation source (26) by the electronic supply unit is terminated and/or the first closure (42) switches to the closed state.

6. The device according to any one of the preceding claims 3 to 5, wherein the receiving unit (12) has an optical sensor (48) which is configured to detect the beginning of the radiation period of the UV radiation source (26) within the measurement chamber (24) in the second measurement mode,
wherein, in the second measurement mode, the first closure (42) is in the closed state at the beginning of the radiation period and switches to the opened state after a third preselectable duration, and
wherein preferably after a fourth preselectable duration the first closure (42) switches to the closed state and/or the device outputs a signal which signals to terminate the supply of the UV radiation source (26) by the external device (27) for curing UV-curable sewer rehabilitation agents.

7. The device according to any one of the preceding claims, wherein the receiving unit (12) comprises a second UV sensor (40) for measuring the intensity of the UV radiation generated by the UV radiation source (26), and
wherein the receiving unit (12) preferably comprises a second closure (44) associated with the second UV sensor (40), wherein in an opened state of the second closure (44), the second UV sensor (40) is exposed to the UV radiation of the UV radiation source (26), and wherein in a closed state of the second closure (44), the second UV sensor (40) is shielded from the UV radiation of the UV radiation source (26).

8. The device according to any one of the preceding claims, wherein the first UV sensor (38) is configured for detecting a first wavelength range, and wherein preferably the first UV sensor (38) is calibrated for the first wavelength range.

9. The device according to claim 7 or 8, wherein the second UV sensor (40) is configured for detecting a second wavelength range, and wherein preferably the second UV sensor (40) is calibrated for the second wavelength range,
and wherein preferably the first wavelength range and the second wavelength range are different.

10. The device according to any one of the preceding claims, further comprising a control unit (14) which can be communicatively connected to the receiving unit (12) for controlling the intensity measurement.

11. The device according to claim 10, wherein the control unit (14) is configured to log the intensity measurement of the UV radiation source (26) and to store it in a data set which preferably cannot be manipulated, wherein the data set preferably contains an identification number of the UV radiation source (26) and the measured intensity.

12. The device according to any one of the preceding claims, wherein the receiving unit (12) is configured as a lockable housing in which the measurement chamber (24) is arranged,
wherein in an opened state of the housing the UV radiation source (26) can be arranged in the measurement chamber (24),
wherein in a closed state of the housing the measurement chamber (24) is shielded substantially light-tight, and
wherein the housing has at least one supply opening (35, 37) to the measurement chamber (24), wherein the supply opening (35, 37) in the closed state of the housing enables a connection of the UV radiation source (26) located in the measurement chamber to the external device (27) for curing UV-curable sewer rehabilitation agents.

13. The device according to any one of the preceding claims, wherein the UV radiation source connection (28) is exchangeable and/or removable depending on the UV radiation source (26) to be measured, and/or
wherein the receiving unit has positioning means which is configured to position the UV radiation source (26) relative to the first UV sensor (38).

14. A method for intensity measurement of the UV radiation generated by a UV radiation source (26) for sewer rehabilitation work, the method comprising the following steps:
- connecting a UV radiation source (26) to a UV radiation source connection (18) of a device according to any one of claims 1 to 13,
- operating the UV radiation source (26) at the UV radiation source connection,
- performing an intensity measurement of the UV radiation source (26), wherein the method further comprises:
- removing the UV radiation source (26) from the measurement chamber (24);
- placing a UV radiation source (26) connected to an external device (27) for curing UV-curable sewer rehabilitation agents in the measurement chamber,
- performing an intensity measurement of the UV radiation source (26) operated by the external device (27).

## Revendications

1. Un dispositif de mesure de l'intensité (10) du rayonnement UV généré par une source de rayonnement UV (26) pour des travaux de rénovation ou encore de réhabilitation de canalisations, le dispositif comprenant :
- une unité de réception (12) présentant un espace de mesure (24) destiné à recevoir la source de rayonnement UV (26) pendant la mesure de l'intensité,
l'unité de réception (12) comportant un premier capteur UV (38) pour mesurer l'intensité du rayonnement UV généré par la source de rayonnement UV (26),
l'unité de réception (12) comportant un connecteur de source de rayonnement UV (28), auquel la source de rayonnement UV (26) peut être raccordée afin d'alimenter la source de rayonnement UV (26) en tension de service ou en courant de service,
sachant que, dans un premier mode de mesure, le dispositif est conçu pour mesurer l'intensité d'une source de rayonnement UV (26) en disposant la source de rayonnement UV (26) dans l'espace de mesure (24) et en l'alimentant via le connecteur de source de rayonnement UV (28), et
sachant que, dans un deuxième mode de mesure, le dispositif est conçu pour mesurer l'intensité d'une source de rayonnement UV (26) en disposant la source de rayonnement UV (26) dans l'espace de mesure (24) et en l'alimentant en tension de service ou en courant de service non pas par l'unité de réception (12), mais par un dispositif externe (27) destiné à durcir des produits de réhabilitation de canalisations durcissables aux UV.

2. Le dispositif d'après la revendication 1, sachant que l'unité de réception (12) présente un premier obturateur (42) associé au premier capteur UV (38),
sachant que, lorsque le premier obturateur (42) est dans un état ouvert, le premier capteur UV (38) est exposé au rayonnement UV de la source de rayonnement UV (26) et que, lorsque le premier obturateur (42) est dans un état fermé, le premier capteur UV (38) est protégé du rayonnement UV de la source de rayonnement UV.

3. Le dispositif d'après la revendication 2, sachant que le dispositif est conçu pour commander l'état du premier obturateur (42) en fonction d'une durée de rayonnement de la source de rayonnement UV (26) à l'intérieur de l'espace de mesure (24), sachant qu'au début de la durée de rayonnement le premier obturateur (42) est à l'état fermé, puis passe à l'état ouvert après une durée prédéfinissable.

4. Le dispositif d'après l'une des revendications précédentes, sachant que l'unité de réception (12) présente une unité d'alimentation électronique qui est conçue pour alimenter la source de rayonnement UV (26) en tension de service ou en courant de service dans le premier mode de mesure.

5. Le dispositif d'après la revendication 4, sachant que, dans le premier mode de mesure, la durée de rayonnement de la source de rayonnement UV (26) à l'intérieur de l'espace de mesure est déterminée sur la base de la durée d'alimentation de la source de rayonnement UV (26) par l'unité d'alimentation électronique,
sachant qu'au début de l'alimentation de la source de rayonnement UV (26) par l'unité d'alimentation électronique le premier obturateur (42) est à l'état fermé et passe à l'état ouvert après une première durée prédéfinissable, et
sachant que, de préférence, après une deuxième durée prédéfinissable, l'alimentation de la source de rayonnement UV (26) par l'unité d'alimentation électronique est interrompue et/ou que le premier obturateur (42) passe à l'état fermé.

6. Le dispositif d'après l'une des revendications de 3 à 5 précédentes,
sachant que l'unité de réception (12) présente un capteur optique (48) qui est conçu pour détecter, dans le deuxième mode de mesure, le début de la durée de rayonnement de la source de rayonnement UV (26) à l'intérieur de l'espace de mesure (24),
sachant que, dans le deuxième mode de mesure, au début de la durée de rayonnement, le premier obturateur (42) est à l'état fermé et passe à l'état ouvert après une troisième durée prédéfinissable, et
sachant que, de préférence, après une quatrième durée prédéfinissable, le premier obturateur (42) passe à l'état fermé et/ou que le dispositif émet un signal qui indique que l'alimentation de la source de rayonnement UV (26) par le dispositif externe (27) doit être interrompue pour permettre le durcissement des produits de réhabilitation de canalisations durcissables aux UV.

7. Le dispositif d'après l'une des revendications précédentes, sachant que l'unité de réception (12) présente un deuxième capteur UV (40) pour mesurer l'intensité du rayonnement UV généré par la source de rayonnement UV (26), et
sachant que l'unité de réception (12) présente de préférence un deuxième obturateur (44) associé au deuxième capteur UV (40), sachant que, dans un état ouvert du deuxième obturateur (44), le deuxième capteur UV (40) est exposé au rayonnement UV de la source de rayonnement UV (26), et sachant que, dans un état fermé du deuxième obturateur (44), le deuxième capteur UV (40) est protégé du rayonnement UV de la source de rayonnement UV (26).

8. Le dispositif d'après l'une des revendications précédentes, sachant que le premier capteur UV (38) est conçu pour détecter une première plage de longueurs d'onde, et sachant que le premier capteur UV (38) est de préférence calibré pour la première plage de longueurs d'onde.

9. Le dispositif d'après la revendication 7 ou 8, sachant que le deuxième capteur UV (40) est conçu pour la détection d'une deuxième plage de longueurs d'onde, et sachant que, de préférence, le deuxième capteur UV (40) est calibré pour la deuxième plage de longueurs d'onde,
et sachant que, de préférence, la première plage de longueurs d'onde et la deuxième plage de longueurs d'onde sont différentes.

10. Le dispositif d'après l'une des revendications précédentes, comprenant en outre une unité de contrôle (14) pouvant être reliée de manière communicative à l'unité de réception (12), pour commander la mesure d'intensité.

11. Le dispositif d'après la revendication 10, sachant que l'unité de contrôle (14) est conçue pour consigner la mesure d'intensité de la source de rayonnement UV (26) et pour la stocker dans un ensemble de données qui est de préférence inaltérable, sachant que l'ensemble de données contient de préférence un numéro d'identification de la source de rayonnement UV (26) et l'intensité mesurée.

12. Le dispositif d'après l'une des revendications précédentes, sachant que l'unité de réception (12) est conçue comme un boîtier verrouillable dans lequel est agencé l'espace de mesure (24),
sachant que, dans un état ouvert du boîtier, la source de rayonnement UV (26) peut être agencée dans l'espace de mesure (24),
sachant que, dans un état fermé du boîtier, l'espace de mesure (24) est protégé de la lumière de manière essentiellement étanche, et
sachant que le boîtier présente au moins une ouverture d'alimentation (35, 37) vers l'espace de mesure (24), sachant que l'ouverture d'alimentation (35, 37) permet, dans un état fermé du boîtier, de relier la source de rayonnement UV (26), située dans l'espace de mesure, au dispositif externe (27) pour durcir des produits de réhabilitation de canalisations durcissables aux UV.

13. Le dispositif d'après l'une des revendications précédentes, sachant que le connecteur de source de rayonnement UV (28) est interchangeable et/ou amovible en fonction de la source de rayonnement UV (26) à mesurer, et/ou
sachant que l'unité de réception présente un moyen de positionnement qui est conçu pour positionner la source de rayonnement UV (26) par rapport au premier capteur UV (38).

14. Un procédé de mesure de l'intensité du rayonnement UV généré par une source de rayonnement UV (26) pour des travaux de rénovation ou encore de réhabilitation de canalisations, le procédé comprenant les étapes suivantes :
- raccorder une source de rayonnement UV (26) à un connecteur de source de rayonnement UV (18) d'un dispositif d'après l'une des revendications de 1 à 13,
- faire fonctionner la source de rayonnement UV (26) sur le connecteur de source de rayonnement UV,
- réaliser une mesure de l'intensité de la source de rayonnement UV (26), le procédé présentant en outre le fait de :
- retirer la source de rayonnement UV (26) de l'espace de mesure (24) :
- disposer dans l'espace de mesure une source de rayonnement UV (26) connectée à un dispositif externe (27) pour le durcissement de produits de réhabilitation de canalisations durcissables aux UV,
- réaliser une mesure de l'intensité de la source de rayonnement UV (26) mise en fonctionnement par le dispositif externe (27).
